# EUROPÄISCHE PATENTSCHRIFT

(11) **EP 1 634 753 B1**
(45) Veröffentlichungstag und Bekanntmachung des Hinweises auf die Patenterteilung: **08.10.2008**
(21) Anmeldenummer: 05017699.9
(22) Anmeldetag: 13.08.2005
(51) Int. Cl.: B60J 10/02, B60J 10/00

(54) **Profilkörper, insbesondere Halteschienen für Scheiben**
Profile member, especially attachment strips for windshields
Corps profilé, en particulier bandes de fixation pour pare-brises

(30) Priorität: 13.09.2004 DE 102004044598
(43) Veröffentlichungstag der Anmeldung: 15.03.2006
(73) Patentinhaber: REHAU AG + Co, 95111 Rehau (DE)
(72) Erfinder: Chlebecek, Wolfgang, 95111 Rehau (DE)

(56) Entgegenhaltungen:
- WO-A-99/55548
- DE-U1- 20 008 555
- FR-A- 2 713 742
- US-A- 4 477 507

## Beschreibung

Die Erfindung bezieht sich auf einen Profilkörper, insbesondere eine Halteschiene für Scheiben, mit einem Profilbereich, der zumindest abschnittsweise eine Krümmung und wenigstens eine Überschneidung aufweist, und mit wenigstens einer Einlage, die zumindest im Bereich der Krümmung angeordnet und an diese angepasst ist.

Ein Profilkörper dieser Gattung ist beispielsweise aus der DE 200 08 555 U1 bekannt.

Dieser Profilkörper ist zum Abdichten von Fahrzeugscheiben, insbesondere von Frontscheiben, vorgesehen und weist ein im Querschnitt hakenförmiges Profil auf, das zur Aufnahme eines passend geformten Fortsatzes einer Wasserkastenabdeckung vorgesehen ist, die sich an die Unterkante der Scheibe anschließt. Das hakenförmige Profil des Profilkörpers weist zwei Hinterschneidungen auf, die an Außenkanten des hakenförmigen Profiles vorgesehen sind und im eingebauten Zustand von dem Fortsatz der Wasserkastenabdeckung hintergriffen werden. Zur Verbesserung der Stabilität ist das hakenförmige Profil mit einer ebenfalls hakenförmigen Versteifungseinlage versehen.

Zum Montieren des Profilkörpers wird der Fortsatz der Wasserkastenabdeckung mit einer bestimmten Montagekraft in das hakenförmige Profil eingesteckt, das dabei aufgebogen wird und, nachdem der Fortsatz die Hinterschneidungen überwunden hat, in die Halteposition zurückspringt. Zur Demontage des Profilkörpers muss eine entsprechende Demontagekraft aufgewendet werden, um den Fortsatz aus dem hakenförmigen Profil herauszuziehen.

Die Montage- bzw. Demontagekraft ist durch das Material und die Wandstärke des hakenförmigen Profils bzw. der Versteifungseinlage fest vorgegeben. Dies hat den Nachteil, dass die Montage- bzw. Demontagekraft nur durch Austausch der verwendeten Materialien oder durch Änderung der Wandstärke an unterschiedliche Anwendungen des Profilkörpers angepasst werden kann.

Der Erfindung liegt daher die Aufgabe zugrunde, einen Profilkörper der eingangs genannten Art derart zu verbessern, dass die Montage- bzw. Demontagekräfte an unterschiedliche Anwendungen des Profilkörpers einfach und variabel angepasst werden können, und dass das Verformungsverhalten des Profilkörpers bei der Montage bzw. Demontage verbessert ist.

Erfindungsgemäß wird diese Aufgabe durch einen Profilkörper mit den Merkmalen des Anspruchs 1 gelöst.

Die Erfindung hat den Vorteil, dass durch die im Bereich der Krümmung angeordneten und in Längsrichtung des Profilkörpers erstreckten Ausnehmungen der Einlage, die in einem Übergangsbereich der Krümmung breiter ausgebildet sind als im übrigen Bereich der Krümmung, die beim Montieren, bzw. Demontieren im Profilbereich auftretenden Spannungen beeinflusst werden können, wodurch eine Anpassung der Montage- bzw. Demontagekraft des Profilkörpers an den jeweiligen Anwendungsfall ermöglicht wird. Dabei kann durch eine geeignete Wahl der Anzahl der Ausnehmungen eine gezielte Steuerung der Montage- bzw. Demontagekraft vorgenommen werden.

Überdies bietet die Kombination der Anzahl der Ausnehmungen mit anderen Parametern, wie der Geometrie, insbesondere der Wandstärke des Profilbereiches bzw. der Einlage, und dem Material des Profilkörpers bzw. der Einlage, viele Variationsmöglichkeiten zur stufenlosen Einstellung der Montage- bzw. Demontagekraft.

Vorzugsweise weist die Einlage mehrere Ausnehmungen auf, die entlang der Krümmung angeordnet und gleichmäßig und/oder ungleichmäßig voneinander beabstandet sind. Durch eine geeignete Auswahl der Anzahl der Ausnehmungen kann die Montage- bzw. Demontagekraft stufenlos variiert werden. Überdies kann durch die Anordnung der Ausnehmungen mit gleichem Abstand und/oder mit unterschiedlichen Abständen das Spannungsverhalten des Profilkörpers beeinflusst werden, wodurch eine weitere Möglichkeit der Variation der Montage- bzw. Demontagekraft geschaffen wird.

Ferner können die Ausnehmungen gleiche und/oder unterschiedliche Querschnittskonturen aufweisen, so dass eine Vielzahl von Kombinationsmöglichkeiten unterschiedlich oder gleich ausgebildeter Ausnehmungen gebildet wird, die eine weitere Beeinflussung der Montage- bzw. Demontagekraft des Profilkörpers erlaubt.

Die Ausnehmungen können auf der radial innen angeordneten Seite der Einlage und/oder auf der radial außen angeordneten Seite der Einlage vorgesehen sein, wodurch eine variable Beeinflussung der Montage- bzw. Demontagekräfte ermöglicht wird.
Die Einlage weist vorzugsweise vier Ausnehmungen auf.

Gemäß einer weiteren bevorzugten Ausführungsform der Erfindung weist der Profilbereich zwei Schenkel auf, die im Bereich der Krümmung verbunden sind und eine Öffnung bilden, wobei wenigstens ein Schenkel mit der wenigstens einen Hinterschneidung versehen ist. Diese Ausführungsform der Erfindung ist besonders für den Einsatz in der Automobilindustrie zur Halterung einer Frontscheibe in Verbindung mit einer Wasserkastenabdeckung geeignet.

Ferner kann einer der beiden Schenkel mit einer Leiste verbunden sein, wobei die Einlage auf dem Bereich der Leiste angeordnet ist. Diese Ausführungsform ist ebenfalls zur Halterung einer Frontscheibe geeignet, wobei die Leiste, insbesondere durch Kleben, mit der Scheibe verbunden wird.

Die Erfindung wird im Folgenden anhand schematischer Zeichnungen beispielhaft und mit weiteren Einzelheiten erläutert.

Dabei zeigen
- Fig. 1: einen Querschnitt durch einen Profilkörper nach einem Ausführungsbeispiel der Erfindung mit einer Einlage und
- Fig. 2: einen Querschnitt durch die Einlage nach Fig. 1.

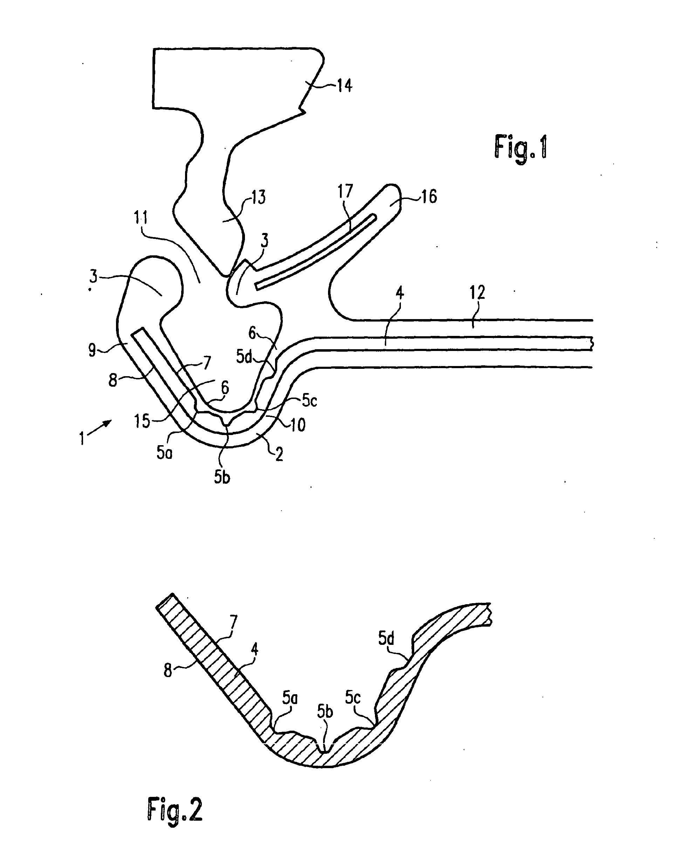

In Fig. 1 ist ein Profilkörper, insbesondere eine Halteschiene, nach einem Ausführungsbeispiel der Erfindung mit seinen wichtigsten Komponenten dargestellt, wie er hauptsächlich für die Halterung und Abdichtung von Windschutzscheiben zum Einsatz kommt.

Der in Fig. 1 dargestellte Profilkörper kann aus einem thermoplastischen Kunststoff, z.B. PP, durch Strangpressen hergestellt sein und umfasst einen Profilbereich 1, der zur Aufnahme eines Fortsatzes bzw. einer Raste 13 vorgesehen ist, die mit einer Wasserkastenabdeckung 14 verbunden ist. Der Profilbereich 1 wird auch als Scharnierbereich bezeichnet.

Der Profilbereich 1 ist im Querschnitt im Wesentlichen hakenförmig ausgebildet und weist zumindest abschnittsweise eine Krümmung 2 auf. Im Bereich dieser Krümmung 2 sind zwei Schenkel 9, 10 des Profilbereiches 1 miteinander verbunden, die eine der Krümmung 2 gegenüber angeordnete Öffnung 11 bilden. Die beiden Schenkel 9, 10 begrenzen einen Aufnahmebereich 15, der durch die Öffnung 11 zugänglich ist. In den Aufnahmebereich 15 wird die Raste 13 eingesteckt.

An den beiden freien Enden der beiden Schenkel 9, 10, d.h. an den der Krümmung 2 gegenüberliegend angeordneten Enden der Schenkel 9, 10, ist jeweils eine Hinterschneidung 3 ausgebildet, die im eingebauten Zustand von der Raste 13 hintergriffen wird, wodurch die Raste 13 im Aufnahmebereich 15 gehalten wird.

In dem Ausführungsbeispiel sind die beiden Hinterschneidungen 3 als wulstförmige Vorsprünge ausgebildet, die die Öffnung 11 seitlich begrenzen. Eine andere Ausbildung der beiden Hinterschneidungen ist möglich, sofern die Haltefunktion der Hinterschneidungen 3 gewährleistet ist. Ferner ist der Aufnahmebereich 15, d.h. die Innenkontur des Profilbereiches 1 in diesem Ausführungsbeispiel im Querschnitt in etwa V-förmig ausgebildet. Andere Querschnittsformen des Aufnahmebereiches 15 sind ebenfalls möglich.

In Fig. 1 ist ferner dargestellt, dass im Bereich der Krümmung 2 des Profilskörpers eine Einlage 4, insbesondere aus Metall, vorgesehen ist, die der Krümmung 2 angepasst ist. Das bedeutet, dass der Radius der Krümmung der Einlage 4 in etwa dem Radius der Krümmung 2 des Profilkörpers entspricht.

Die Einlage 4 ist mit vier Ausnehmungen 5a, 5b, 5c, 5d ausgebildet, die im Bereich der Krümmung 2 angeordnet sind und sich in Längsrichtung des Profilkörpers, d.h. senkrecht zur Bildebene erstrecken. Die Ausnehmungen 5a, 5b, 5c, 5d sind insbesondere als Kerben ausgebildet.

Die Erfindung ist nicht auf die gezeigte Anzahl der Ausnehmungen 5a, 5b, 5c, 5d beschränkt, sondern umfasst auch einen Profilkörper, der eine andere Anzahl von Ausnehmungen, beispielsweise zwei, drei, fünf oder mehr Ausnehmungen im Bereich der Krümmung 2 des Profilkörpers aufweist.

Wie besonders gut in Fig. 2 zu erkennen, sind die Ausnehmungen 5a, 5b, 5c, 5d unterschiedlich breit und weisen unterschiedliche Kerbradien auf. Insbesondere die im Übergangsbereich 6 der Krümmung 2 (siehe Fig. 1) vorgesehenen Ausnehmungen 5a, 5b sind etwas breiter als die dazwischen angeordneten Ausnehmungen 5b, 5c.

Die unterschiedlichen Kerbgeometrien resultieren zum Teil aus dem Fertigungsverfahren und entstehen insbesondere durch die Verformung der Einlage 4. Dadurch kommt es in den Ausnehmungen 5a, 5b, 5c, 5d zu einer Kaltverfestigung, die sich günstig auf das Verformungsverhalten des Profilkörpers bei der Montage bzw. Demontage auswirkt.

Es ist auch möglich, die Kerbgeometrien der Ausnehmungen 5a, 5b, 5c, 5d bereits bei der Herstellung der Einlage 4 so zu beeinflussen, dass die Ausnehmungen 5a, 5b, 5c, 5d der endgefertigten Einlage 4 eine bestimmte Querschnittskontur aufweisen, die in einem gewünschten Verformungsverhalten der Einlage 4 und somit des Profilbereiches 1 resultiert. Die Ausnehmungen 5a, 5b, 5c, 5d können auf der radial innen angeordneten Seite 7, wie in Fig. 2 dargestellt, oder auf der radial außen angeordneten Seite 8 der Einlage 4 angeordnet sein. Eine Kombination von beidseitig angeordneten Ausnehmungen 5a, 5b, 5c, 5d ist ebenfalls möglich. Ebenso sind gegenüberliegend angeordnete Ausnehmungen, die auch parallel angeordnet werden können, ebenfalls möglich.

Ausgehend von einer bestimmten Wandstärke der Einlage 4 können die Montage- bzw. Demontagekräfte des Profilkörpers durch geeignete Änderung der Kerbengeometrie und/oder durch eine geeignete Änderung der Anzahl der Ausnehmungen 5a, 5b, 5c, 5d beeinflusst werden. Beispielsweise können mit einem Profilkörper gemäß Fig. 1, der bspw. eine metallische oder keramische Einlage 4 von 0,4 mm aufweist, in etwa dieselben Montage- bzw. Demontagekräfte erzielt werden, wie bei einem Profilkörper aus denselben Materialien, bei dem die Einlage 4 (ohne Ausnehmungen) eine Stärke von 0,2 mm aufweist.

Durch Änderung der Anzahl der Ausnehmungen 5a, 5b, 5c, 5d können die Montage- bzw. Demontagekräfte stufenlos variabel eingestellt werden.

Der Profilkörper gemäß Fig. 1 ist besonders zur Halterung und Abdichtung einer Windschutzscheibe geeignet, wobei die mit dem einen der beiden Schenkel 9,10 verbundene Leiste 12 an einer Innenfläche der (nicht gezeigten) Scheibe befestigt wird. Der scheibennahe Schenkel 10 ist mit einer Dichtlippe 16 verbunden, die die Unterkante der (nicht gezeigten) Scheibe abdichtet. Zur Verstärkung der Dichtlippe 16 ist diese mit einer weiteren Einlage 17 ausgestattet.
Die Erfindung ist nicht nur auf Halteschienen für Fahrzeugscheiben beschränkt, sondern kann auf allen Gebieten angewendet werden, die ein Fügen von Teilen unter Aufbringung bestimmter Montage- bzw. Demontagekräfte erfordern.

## Patentansprüche

1. Profilkörper, insbesondere Halteschiene für Scheiben, mit einem Profilbereich (1), der zumindest abschnittsweise eine Krümmung (2) und wenigstens eine Hinterschneidung (3) aufweist, und mit wenigstens einer Einlage (4), die zumindest im Bereich der Krümmung (2) angeordnet und an diese angepasst ist, wobei die Einlage (4) Ausnehmungen (5a, 5b, 5c, 5d), insbesondere Kerben, aufweist, **dadurch gekennzeichnet, dass** die Ausnehmungen im Bereich der Krümmung (2) angeordnet sind, in Längsrichtung des Profilkörpers erstreckt sind und die Ausnehmungen (5a, 5b, 5c, 5d) in einem Übergangsbereich (6) der Krümmung (2) breiter ausgebildet sind als im übrigen Bereich der Krümmung (2).

2. Profilkörper nach Anspruch 1, **dadurch gekennzeichnet, dass** die Einlage (4) mehrere Ausnehmungen (5a, 5b, 5c, 5d) aufweist, die entlang der Krümmung (2) angeordnet und gleichmäßig und/oder ungleichmäßig voneinander beabstandet sind.

3. Profilkörper nach Anspruch 1 oder 2, **dadurch gekennzeichnet, dass** die Ausnehmungen (5a, 5b, 5c, 5d) gleiche und/oder unterschiedliche Querschnittskonturen aufweisen.

4. Profilkörper nach wenigstens einem der Ansprüche 1 bis 3, **dadurch gekennzeichnet, dass** die Ausnehmungen (5a, 5b, 5c, 5d) auf der radial innen angeordneten Seite (7) der Einlage (4) und/oder auf der radial außen angeordneten Seite (8) der Einlage (4) vorgesehen sind.

5. Profilkörper nach wenigstens einem der Ansprüche 1 bis 4, **dadurch gekennzeichnet, dass** die Einlage (4) mindestens vier Ausnehmungen (5a, 5b, 5c, 5d) aufweist.

6. Profilkörper nach wenigstens einem der Ansprüche 1 bis 5, **dadurch gekennzeichnet, dass** der Profilbereich (2) Schenkel (9, 10) aufweist, die im Bereich der Krümmung (2) verbunden sind und eine Öffnung (11) bilden, wobei wenigstens ein Schenkel (9, 10) mit der wenigstens einen Hinterschneidung (3) versehen ist.

7. Profilkörper nach Anspruch 6, **dadurch gekennzeichnet, dass** einer der beiden Schenkel (9, 10) mit einer Leiste (12) verbunden ist, wobei die Einlage (4) auch im Bereich der Leiste (12) angeordnet ist.

## Claims

1. Profiled member, in particular a holding rail for windows, with a profiled region (1) which has, at least in certain sections, a curvature (2) and at least one undercut (3), and with at least one insert (4) which is arranged at least in the region of the curvature (2) and is tailored to this curvature, wherein the insert (4) has cutouts (5a, 5b, 5c, 5d), in particular notches, **characterized in that** the cutouts are arranged in the region of the curvature (2) and are extended in the longitudinal direction of the profiled member, and the cutouts (5a, 5b, 5c, 5d) are designed to be wider in a transition region (6) of the curvature (2) than in the remaining region of the curvature (2).

2. Profiled member according to Claim 1, **characterized in that** the insert (4) has a plurality of cutouts (5a, 5b, 5c, 5d) which are arranged along the curvature (2) and are spaced apart uniformly and/or non-uniformly.

3. Profiled member according to Claim 1 or 2, **characterized in that** the cutouts (5a, 5b, 5c, 5d) have identical and/or different cross-sectional contours.

4. Profiled member according to at least one of Claims 1 to 3, **characterized in that** the cutouts (5a, 5b, 5c, 5d) are provided on the radially inwardly arranged side (7) of the insert (4) and/or on the radially outwardly arranged side (8) of the insert (4).

5. Profiled member according to at least one of Claims 1 to 4, **characterized in that** the insert (4) has at least four cutouts (5a, 5b, 5c, 5d).

6. Profiled member according to at least one of Claims 1 to 5, **characterized in that** the profiled region (2) has legs (9, 10) which are connected in the region of the curvature (2) and form an opening (11), wherein at least one leg (9, 10) is provided with the at least one undercut (3).

7. Profiled member according to Claim 6, **characterized in that** one of the two legs (9, 10) is connected to a strip (12), wherein the insert (4) is also arranged in the region of the strip (12).

## Revendications

1. Corps profilé, en particulier bandes de fixation pour vitres, comprenant une région profilée (1), qui présente au moins en partie une courbure (2) et au moins une contre-dépouille (3), et comprenant au moins un insert (4) qui est disposé au moins dans la région de la courbure (2) et qui lui est adapté, l'insert (4) présentant des évidements (5a, 5b, 5c, 5d), notamment des encoches, **caractérisé en ce que** les évidements sont disposés dans la région de la courbure (2), s'étendent dans la direction longitudinale du corps profilé, et les évidements (5a, 5b, 5c, 5d) sont plus larges dans une région de transition (6) de la courbure (2) que dans la région restante de la courbure (2).

2. Corps profilé selon la revendication 1, **caractérisé en ce que** l'insert (4) présente plusieurs évidements (5a, 5b, 5c, 5d) qui sont disposés le long de la courbure (2) et qui sont espacés les uns des autres de manière uniforme et/ou non uniforme.

3. Corps profilé selon la revendication 1 ou 2, **caractérisé en ce que** les évidements (5a, 5b, 5c, 5d) présentent des contours en section transversale identiques et/ou différents.

4. Corps profilé selon au moins l'une quelconque des revendications 1 à 3, **caractérisé en ce que** les évidements (5a, 5b, 5c, 5d) sont prévus du côté (7) disposé radialement vers l'intérieur de l'insert (4) et/ou du côté (8) disposé radialement vers l'extérieur de l'insert (4).

5. Corps profilé selon au moins l'une quelconque des revendications 1 à 4, **caractérisé en ce que** l'insert (4) présente au moins quatre évidements (5a, 5b, 5c, 5d).

6. Corps profilé selon au moins l'une quelconque des revendications 1 à 5, **caractérisé en ce que** la région profilée (2) présente des branches (9, 10) qui sont connectées dans la région de la courbure (2) et qui forment une ouverture (11), au moins une branche (9, 10) étant pourvue d'au moins une contre-dépouille (3).

7. Corps profilé selon la revendication 6, **caractérisé en ce que** l'une des deux branches (9, 10) est connectée à une baguette (12), l'insert (4) étant aussi disposé dans la région de la baguette (12).
